(19) Europäisches Patentamt / European Patent Office / Office européen des brevets

(11) **EP 2 338 027 B1**

(12) **FASCICULE DE BREVET EUROPEEN**

(45) Date de publication et mention
de la délivrance du brevet:
**09.07.2014   Bulletin 2014/28**

(21) Numéro de dépôt: **09760168.6**

(22) Date de dépôt: **16.10.2009**

(51) Int Cl.:
*G01C 19/56* (2012.01)      *G01C 19/567* (2012.01)

(86) Numéro de dépôt international:
**PCT/FR2009/051983**

(87) Numéro de publication internationale:
**WO 2010/046585 (29.04.2010 Gazette 2010/17)**

(54) **MESURE GYROSCOPIQUE PAR UN GYROSCOPE VIBRANT**

KREISELMESSUNG UNTER VERWENDUNG EINES VIBRIERENDEN KREISELS

GYROSCOPIC MEASUREMENT USING A VIBRATING GYROSCOPE

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité:  **20.10.2008   FR 0857120**

(43) Date de publication de la demande:
**29.06.2011   Bulletin 2011/26**

(73) Titulaire: **SAGEM DEFENSE SECURITE
92100 Boulogne-Billancourt (FR)**

(72) Inventeurs:
• **LIGNON, Christian
  F-75015 Paris (FR)**
• **CARRE, Arnaud
  F-75015 Paris (FR)**

(74) Mandataire: **Cabinet Plasseraud
52, rue de la Victoire
75440 Paris Cedex 09 (FR)**

(56) Documents cités:
**EP-A- 1 491 856    EP-A- 1 571 417
FR-A- 2 904 870**

**Description**

La présente invention est relative aux gyroscopes vibrants dont le principe repose sur l'effet de Coriolis et elle est plus particulièrement relative à la précision des mesures fournies par ce type de gyroscope.

De tels gyroscopes vibrants sont classiquement utilisés dans des systèmes inertiels destinés à la navigation, comme cela est le cas par exemple pour un compas gyroscopique qui est adapté pour fournir une mesure d'angle par rapport à une direction de référence qui est celle du Nord géographique (Cap).

Les gyroscopes de type Coriolis Vibratory Gyroscopes (CVG) axisymétriques, par exemple de type Hemispherical Résonance Gyroscopes (HRG ou GRH) ou plus généralement dits de type I, tels que ceux décrits dans le document 'Type I und Type II micromachined vibratory gyroscopes' de Andrei M. Shkel, pages 586-593, IEEE/ION (pour 'Institute of Electrical and Electronics Engineer/ Institute Of Navigation' PLANS 2006, San Diego, CA, USA), fonctionnent en boucle ouverte et permettent de mesurer un angle de rotation absolu sur la base d'une mesure d'un angle représentant la position géométrique de vibration du gyroscope par rapport à des électrodes de mesure.

Un tel gyroscope peut aussi être utilisé en boucle fermée par le contrôle de la position géométrique de vibration via une commande de précession comme cela est décrit notamment dans le document FR 2 755 227.

Dans ce cas, la position géométrique de vibration du gyroscope est maintenue dans une position fixe, et la mesure est déduite à partir de la commande qu'il est nécessaire d'appliquer au gyroscope pour le maintenir dans cette position géométrique de vibration fixe. Ce type de fonctionnement est également appelé 'bouclage en gyromètre'. Les valeurs fournies par la mesure physique ne correspondent plus alors à un angle mais à une vitesse de rotation.

Qu'ils soient utilisés en boucle ouverte ou en boucle fermée, les mesures fournies par ces gyroscopes vibrants peuvent être entachées d'erreurs qui sont essentiellement fonction de la position de la vibration par rapport aux électrodes de mesure. Ces erreurs sont donc variables en fonction de la position géométrique de vibration, et ont pour effet de dégrader le niveau de précision des valeurs ainsi mesurées. Il est donc utile de chercher à réduire ces erreurs afin d'améliorer les performances de ce type de gyroscope.

Le document EP1571417 décrit un procédé de mesures gyroscopiques fournies par un système comprenant un gyroscope vibrant qui vibre dans une première position de vibration dite initiale et fournissant un signal de mesure, le procédé consistant à appliquer un signal de commande périodique au gyroscope pour faire tourner la position de vibration dans un premier sens jusqu'à une deuxième position de vibration pendant la première partie de la période du signal de commande et pour faire tourner la position de vibration dans un second sens depuis la deuxième position de vibration jusqu'à la première position de vibration pendant la deuxième partie de la période du signal de commande.

Le document FR2904870 décrit un procédé de mesure gyroscopique basé sur un gyroscope vibrant avec un résonateur hémisphérique en forme de cloche pour lequel la position de vibration initiale est calibrée pour correspondre à un minimum de l'erreur de dérive du gyroscope.

La présente invention vient améliorer la situation.

Un premier aspect de la présente invention propose un procédé de mesures gyroscopiques fournies par un système gyroscopique comprenant un gyroscope vibrant ;

ledit gyroscope vibrant dans une première position géométrique de vibration initiale et fournissant un signal de mesure ;

dans lequel on applique au gyroscope vibrant un signal de commande périodique, sur une période de temps, adapté :

- pour faire tourner la position géométrique de vibration dans un premier sens, pendant une première partie de la période de temps, provoquant un changement, selon un premier profil de vitesse, de la position de la vibration dudit gyroscope depuis la première position géométrique de vibration jusqu'à une seconde position géométrique de vibration ; et

- pour faire tourner la position géométrique de vibration dans un second sens opposé au premier sens, pendant l'autre partie de la période de temps, provoquant un changement, selon un second profil de vitesse, de la position de la vibration dudit gyroscope depuis la seconde position géométrique de vibration jusqu'à la première position géométrique de vibration ;

le signal de commande ayant une moyenne nulle sur la période de temps, et les premier et second profils de vitesse indiquant une variation de vitesse du changement de position géométrique de vibration en fonction du temps ; et dans lequel les mesures fournies par le système gyroscopique sont basées sur un signal corrigé représentant une variation de valeurs de position géométrique de vibration et obtenu en retranchant le signal de commande au signal de mesure fourni par le gyroscope.

Dans un mode de réalisation de la présente invention, un système gyroscopique comprend un gyroscope vibrant qui fournit un signal de mesure représentant une variation de sa position géométrique de vibration en fonction du temps.

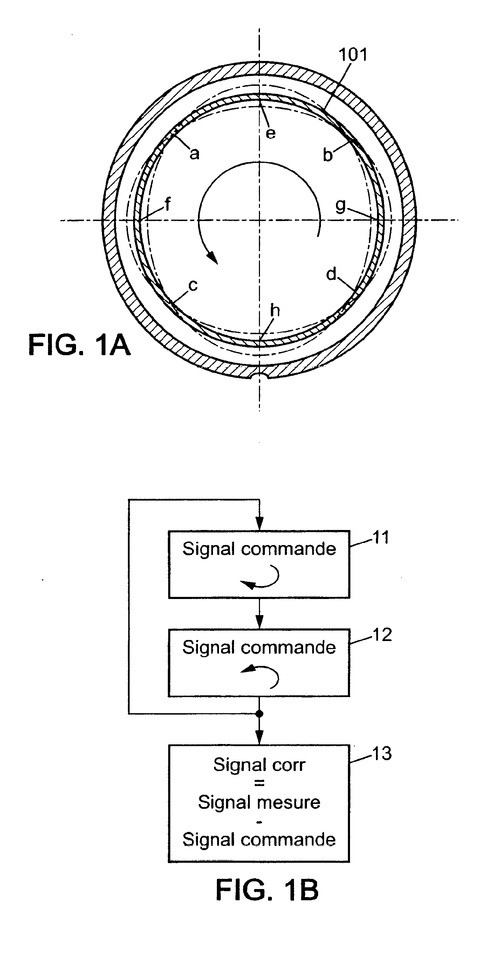

On entend par les termes 'position géométrique de vibration' d'un gyroscope, la position de l'onde stationnaire. La figure 1-A illustre une telle onde stationnaire.

L'onde illustrée ici a quatre noeuds a, b, c, d et quatre ventres e, f, g, h autour de la périphérie d'un résonateur hémisphérique 101. Ces quatre ventres et quatre noeuds sont alternés et uniformément espacés de quarante-cinq degrés. Les noeuds sont des points sur l'onde stationnaire où le déplacement est minimal, et les ventres sont des points sur l'onde stationnaire où le déplacement est maximal. Le fonctionnement du gyroscope à résonateur hémisphérique exige un suivi précis du mouvement de l'onde stationnaire, qui exige à son tour que l'emplacement des noeuds et des ventres soit déterminé avec exactitude.

On peut faire tourner la position de cette onde stationnaire, ou encore la position géométrique de vibration du gyroscope de sorte que les noeuds et les ventres illustrés ne soient pas situés comme cela est illustrés, mais en décalage.

Avantageusement, ce gyroscope vibrant est soumis à un signal de commande périodique, sur une période de temps, qui est adapté pour faire tourner la position géométrique de vibration du gyroscope, dans un premier sens, pendant une partie de la période de temps, et selon un premier profil de vitesse, puis dans un sens opposé selon un second profil de vitesse. Ainsi, le signal de mesure fourni par le gyroscope vibrant est basé sur des mesures faites dans des positions géométriques de vibrations différentes, de telle sorte que les erreurs de mesure qui sont liées aux positions géométriques de vibration du gyroscope vibrant peuvent être annulées ou encore moyennées. En outre, il convient de retrancher de ce signal de mesure fourni par le gyroscope vibrant le signal de commande périodique qui lui a été appliqué pour obtenir in fine des mesures gyroscopiques corrigées.

Le signal de commande périodique peut correspondre, sur une période de temps, à un changement de la position géométrique de vibration dans un premier sens de la première à la seconde position géométrique de vibration, ce changement de position géométrique de vibration étant effectué selon le premier profil de vitesse, puis à un changement de la position géométrique de vibration dans un second sens de la seconde à la première position géométrique de vibration, ce changement de position étant effectué selon le second profil de vitesse. Chacun de ces profils de vitesse indique une variation en fonction du temps de la vitesse de rotation qui est appliquée à la position géométrique de vibration via le signal de commande selon un mode de réalisation de la présente invention.

Dans un mode de réalisation de la présente invention, le second profil de vitesse correspond à l'inverse du premier profil de vitesse en fonction du temps. Ainsi, le signal de commande appliqué est symétrique de part et d'autre du milieu de sa période de temps.

Dans un mode de réalisation, on peut prévoir que les première et seconde parties de période de temps sont identiques.

Dans un mode de réalisation, le signal de mesure du gyroscope et le signal de commande sont exprimés comme les mesures fournies par le système gyroscopique, soit en valeurs d'angle, soit en valeurs de vitesse angulaire. Dans ce cas, avantageusement, il n'est pas nécessaire d'effectuer une intégration de signal avant de procéder à la soustraction du signal de commande au signal de mesure.

Grâce à ces dispositions, les mesures fournies par le système gyroscopique à un gyroscope vibrant peuvent avantageusement être basées sur un signal de mesure fourni par le gyroscope vibrant dont la position géométrique de vibration varie selon les premier et second profils de vitesse.

Dans un mode de réalisation de la présente invention, les mesures fournies par le système gyroscopique correspondent à des valeurs de vitesse angulaire, chaque valeur de vitesse angulaire résultant de la division d'une différence entre deux valeurs de positions géométriques de vibration du signal corrigé, séparées par un nombre entier de périodes de temps, par une valeur de temps correspondant au nombre entier de périodes de temps.

En procédant ainsi, on est en mesure de fournir des valeurs de mesure gyroscopique qui sont non seulement corrigées des erreurs relatives aux positions géométriques de vibration du gyroscope vibrant, mais en outre qui ne sont pas impactées par les erreurs relatives aux différences entre les facteurs d'échelle du signal de mesure et du signal de commande sur une période complète. Sur une période non entière, en retranchant ainsi deux signaux entre eux, le signal résultant peut être entaché d'une erreur, dite erreur de facteur d'échelle (de précession). Dans le présent contexte, cette erreur de facteur d'échelle peut correspondre au fait que le signal corrigé comporte encore des résidus du signal de commande, ou encore comporte encore un signal de commande résiduel.

En effectuant une différence entre deux positions géométriques de vibration du gyroscope vibrant qui sont séparées dans le temps par un nombre entier de période(s) du signal de commande, on est en mesure d'annuler les erreurs liées au facteur d'échelle. Puis, en divisant cette différence entre positions géométriques de vibration par la période de temps séparant ces deux positions, on obtient alors une vitesse angulaire qui est affranchie d'erreur de facteur d'échelle.

Dans un mode de réalisation de la présente invention, les mesures fournies par le système gyroscopique sont en outre issues d'un filtrage passe-bas du signal corrigé.

En filtrant ainsi le signal corrigé, on est également en mesure de s'affranchir des erreurs de facteur d'échelle pouvant affecter le signal corrigé. En effet, si l'on prend en considération le signal corrigé sur une période de temps assez longue, le signal de commande résiduel peut alors être considéré comme un signal à haute fréquence relativement au signal corrigé, et peut de ce fait être filtré par un filtre passe-bas. On entend par exemple par période de temps assez longue, une période de temps qui correspond à vingt, ou plus, périodes de temps du signal de commande.

Dans le contexte ci-dessus, on peut donc avantageusement prévoir d'appliquer le signal périodique pendant un intervalle de temps suffisamment long pour pouvoir considérer le signal de commande comme un signal haute fréquence par rapport au signal de mesure du gyroscope vibrant, avant de fournir des mesures du système gyroscopique.

Puis, une fois que le filtrage passe-bas peut être appliqué, alors les mesures gyroscopiques selon un mode de réalisation peuvent être fournies sur la base du signal corrigé filtré, en prenant en considération une fenêtre temporelle glissante de largeur au moins égale à l'intervalle de temps considéré ci-dessus.

Dans ce contexte, on peut attendre une période de temps minimale avant de fournir des mesures par le système gyroscopique, afin de pouvoir filtrer le signal de commande résiduel en tant que signal haute fréquence du signal corrigé. Cette période de temps minimale est avantageusement définie en fonction de la périodicité du signal de commande appliqué. En effet, il convient de déterminer une période de temps minimale de façon à ce que le signal de commande soit considéré comme un signal haute fréquence par rapport au signal de mesure fourni par le gyroscope vibrant.

On peut prévoir de déterminer la période et la vitesse constante du signal de commande de telle sorte que la première et la seconde position géométrique de vibration du gyroscope vibrant sont séparées de $2\pi/kN$ radians, où N est un mode fréquentiel de vibration du gyroscope vibrant ;

où k est un nombre entier positif déterminé en fonction de l'ordre des erreurs à corriger.

En prévoyant de balayer ainsi une amplitude angulaire pour la position géométrique de vibration du gyroscope vibrant, on est en mesure de corriger différents ordres d'erreur relative à la position géométrique de vibration du gyroscope, puisque une telle erreur vérifie sensiblement l'équation suivante :

$$erreur = \sum_{n=1}^{\infty} a_n \sin(nN\theta) + b_n \cos(nN\theta)$$

où $\theta$ est une valeur de position géométrique de vibration ; et
où n est un nombre entier.

Ainsi, par exemple, pour k égal à 1 et N égal à 2, on peut corriger tous les ordres d'erreurs. Dans le cas général, on peut moyenner les erreurs d'un ordre d'erreur correspondant à n supérieur ou égal à k.

En procédant ainsi, on obtient, in fine, un signal corrigé à partir du signal de mesure du gyroscope vibrant sur lequel on filtre, en tant que signal haute fréquence, le signal de commande résiduel lié au facteur d'échelle qui a fait tourner sa position géométrique de vibration comme cela est énoncé ci-dessus. A partir de ce signal corrigé et filtré, on est avantageusement en mesure de moyenner les erreurs de mesure relatives à la position géométrique de vibration du gyroscope vibrant. On peut de ce fait annuler de telles erreurs.

Un deuxième aspect de la présente invention propose un système gyroscopique comprenant des moyens adaptés pour la mise en oeuvre d'un procédé de mesure selon un mode de réalisation de la présente invention.

Un tel système gyroscopique peut comprendre :

- un gyroscope vibrant, ledit gyroscope vibrant dans une première position géométrique de vibration initiale et fournissant un signal de mesure ;
- une unité de commande adaptée pour appliquer un signal de commande périodique, selon une période de temps, adapté :

  ○ pour faire tourner la position géométrique de vibration dans un premier sens, pendant une partie de la période de temps, provoquant un changement, selon un premier profil de vitesse, de la position de la vibration dudit gyroscope depuis la première position géométrique de vibration jusqu'à une seconde position géométrique de vibration ; et
  ○ pour faire tourner la position géométrique de vibration dans un second sens opposé au premier sens, pendant l'autre période de temps, provoquant un changement, selon un second profil de vitesse, de la position de la vibration dudit gyroscope depuis la seconde position géométrique de vibration jusqu'à la première position géométrique de vibration ;

  le signal de commande ayant une moyenne nulle sur la période de temps, et les premier et second profils de vitesse indiquant une variation de vitesse du changement de position géométrique de vibration en fonction du temps ; et
- une unité de traitement adaptée pour fournir un signal corrigé représentant une variation de valeurs de position géométrique de vibration obtenu en retranchant le signal de commande au signal de mesure fourni par le gyroscope vibrant.

Le second profil de vitesse peut correspondre à l'inverse du premier profil de vitesse en fonction du temps.

Il peut en outre comprendre une unité de calcul, en sortie de l'unité de traitement, adaptée pour fournir des mesures gyroscopiques correspondant à des valeurs de vitesse angulaire, chaque valeur de vitesse angulaire résultant de la division d'une différence entre deux valeurs de positions géométriques de vibration du signal corrigé séparées par un nombre entier de périodes de temps par une valeur de temps correspondant au nombre entier de périodes de temps.

Il peut aussi inclure un filtre passe-bas en sortie de l'unité de traitement, adapté pour filtrer des composantes hautes fréquences du signal corrigé.

Dans ce système gyroscopique, la période et la vitesse constante du signal de commande peuvent être déterminées de sorte que la première et la seconde position géométrique de vibration du gyroscope vibrant sont séparées de $2\pi/kN$ radians,

où N est un mode fréquentiel de vibration du gyroscope vibrant ;

où k est un nombre entier positif déterminé en fonction de l'ordre des erreurs à corriger.

D'autres caractéristiques et avantages de l'invention apparaîtront encore à la lecture de la description qui va suivre. Celle-ci est purement illustrative et doit être lue en regard des dessins annexés sur lesquels :

- la figure 1-A illustre une position géométrique de vibration d'un gyroscope vibrant ;
- la figure 1-B illustre les principales étapes d'un procédé de mesure par un système gyroscopique selon un mode de réalisation de la présente invention ;
- la figure 1-C illustre des premier et second profils de vitesse en fonction du temps selon un mode de réalisation de la présente invention ;
- la figure 2-A illustre une architecture d'un système gyroscopique selon un mode de réalisation de la présente invention ;
- la figure 2-B illustre un signal corrigé et un signal corrigé filtré selon un mode de réalisation de la présente invention ;
- les figures 3 et 4 illustrent un signal de commande et son intégration selon un mode de réalisation de la présente invention ;
- la figure 5 illustre une architecture d'un signal gyroscopique dans un autre mode de réalisation de la présente invention.

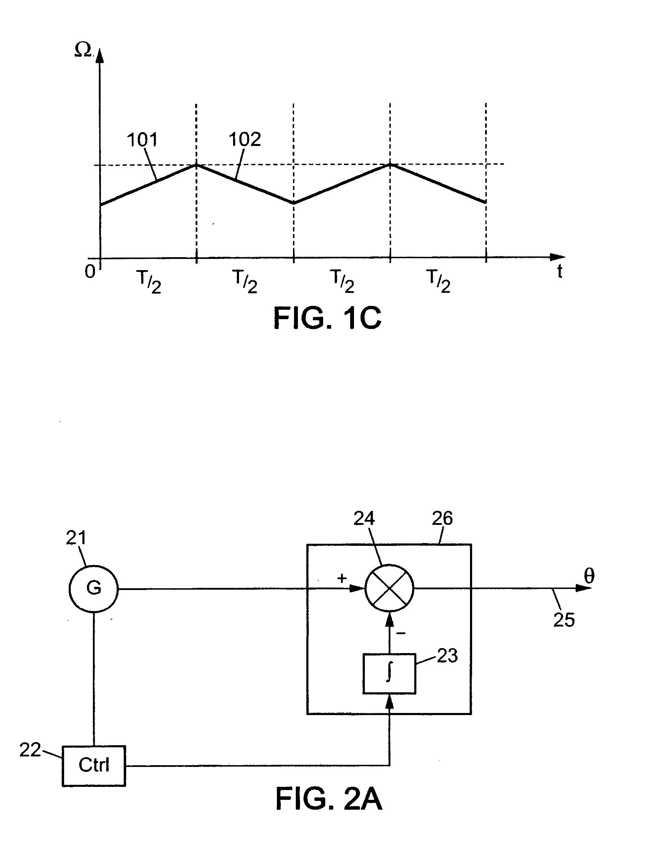

La figure 1 illustre les principales étapes d'un procédé de mesure selon un mode de réalisation de la présente invention.

A une étape 11, on applique un signal de commande périodique adapté pour faire tourner la position géométrique de vibration dans un premier sens, pendant une partie de la période du signal de commande périodique. Sous ce signal de commande, la position géométrique de vibration du gyroscope vibrant tourne à une vitesse, qui peut varier en fonction du temps selon un premier profil déterminé, dans un premier sens. Ainsi, le gyroscope vibrant passe d'une première position géométrique de vibration à une seconde position géométrique de vibration. Ce premier profil de vitesse peut également correspondre à une vitesse constante, auquel cas, la position géométrique de vibration varie alors de manière continue sur la partie de période de temps considérée.

Puis, à une étape 12, on applique un signal de commande adapté pour faire tourner la position géométrique de vibration dans un second sens opposé au premier sens, pendant l'autre période de temps du signal de commande. Le signal de commande provoque ici un changement de la position de la vibration du gyroscope depuis la seconde position géométrique de vibration jusqu'à la première position géométrique de vibration, ce changement étant effectué selon une vitesse qui peut être variable en fonction du temps selon un second profil de vitesse. Le signal de commande a une moyenne de valeur nulle sur la période du signal de commande périodique.

Dans un mode de réalisation, le second profil de vitesse correspond au premier profil de vitesse inversé en fonction du temps. Ainsi, les premier et second profils de vitesse sont symétriques l'un par rapport à l'autre par rapport au centre de la période de temps.

Le gyroscope vibrant se trouve donc ensuite dans la position géométrique de vibration initiale, c'est-à-dire la première position géométrique de vibration après l'étape 12.

Il convient de noter que dans un mode de réalisation de la présente invention, les premier et second profils de vitesse indiquent une vitesse constante en fonction du temps, avec une variation nulle de ce fait, c'est-à-dire que la position de la vibration tourne à vitesse constante à la fois dans le premier sens et dans le second sens.

Ce signal de commande est donc un signal de précession périodique adapté pour appliquer une précession alternée au gyroscope vibrant.

Puis, on répète les étapes 11 et 12 de sorte à disposer de mesures du gyroscope vibrant sur une certaine période de temps, alors que ce dernier est en cours de précession.

Dans un tel contexte, on peut avantageusement disposer d'un signal de mesure du gyroscope vibrant pour des positions géométriques de vibration différentes. Il suffit ensuite de retrancher, au signal de mesure du gyroscope vibrant, le signal de commande appliqué au gyroscope vibrant pour obtenir un signal corrigé à une étape 13. Par signal de commande, on peut ici entendre un signal indiquant une variation de valeurs d'angle en fonction du temps. Dans ce cas, lorsque le signal de mesure du gyroscope correspond à des valeurs d'angles la soustraction entre les signaux peut être effectuée directement, et lorsque le signal de mesure correspond à des valeurs de vitesse angulaire, alors il est prévu de déterminer l'intégrale du signal de commande afin d'obtenir le signal de commande sous la forme de valeurs d'angle et de pouvoir le soustraire au signal de mesure.

Il convient de noter que l'étape 13 peut être réalisée de manière continue pendant les étapes 11 et 12 sont successivement effectuées.

Les mesures fournies par le système gyroscopique peuvent alors être basées sur ce signal corrigé qui représente une variation de valeurs de position géométrique de vibration du gyroscope et qui est obtenu en retranchant les signaux de commande au signal de mesure fourni par le gyroscope pendant la mise en oeuvre les étapes 11 et 12.

La figure 1-C illustre des premier et second profils de vitesse selon un mode de réalisation de la présente invention. La figure 1-C illustre le signal de commande en fonction du temps, c'est à dire la variation de la vitesse angulaire $\Omega$ en fonction du temps. Ici, la vitesse angulaire correspondant au signal de commande de changement de la position géométrique de vibration du gyroscope augmente de manière continue sur la première partie de la période du signal de commande et diminue, de la même manière qu'elle a augmentée, symétriquement, sur la seconde partie de la période du signal de commande. Ainsi, la partie 101 illustre le premier profil de vitesse et la partie 102 illustre le second profil de vitesse, ces deux profils de vitesse étant inversés temporairement l'un par rapport à l'autre.

Par la suite, à titre illustratif uniquement, les premier et second profils de vitesse indiquent une variation de vitesse nulle en fonction du temps, c'est-à-dire une valeur de vitesse constante.

La figure 2-A illustre une architecture d'un système gyroscopique comprenant des moyens adaptés pour la mise en oeuvre d'un procédé de mesure selon un mode de réalisation de la présente invention.

Un système gyroscopique selon un mode de réalisation comprend au moins un gyroscope vibrant 21 adapté pour recevoir et interpréter des signaux de commande reçus d'une unité de commande 22. Une telle unité de commande 22 est adaptée pour émettre des signaux de commande afin de contrôler un changement de position géométrique de vibration du gyroscope 21. Plus précisément, une telle unité de commande 22 génère un signal de commande pour faire tourner la position géométrique de vibration du gyroscope vibrant à une vitesse angulaire continue depuis une première position jusqu'à une seconde position géométrique de vibration.

Un tel système gyroscopique comprend en outre une unité de traitement 26 qui reçoit d'une part les signaux de commande depuis l'unité de commande 22 et d'autre part un signal de mesure du gyroscope 21.

L'unité de traitement 26 comprend une unité d'intégration 23 adaptée pour recevoir le signal de commande émis par l'unité de commande 22, qui indique des valeurs d'angle, et pour opérer une intégration de ces signaux de commande.

Cette unité de traitement 26 comprend en outre un soustracteur de signal 24 qui reçoit d'un côté le signal de mesure du gyroscope vibrant 21 et d'un autre côté le signal de commande intégré fourni par l'unité d'intégration 23, cette unité de traitement 26 fournissant en sortie 25 un signal corrigé.

Il convient de noter ici que le signal corrigé fourni en sortie de l'unité de traitement est entachée d'une erreur relative au facteur d'échelle. Par conséquent, un signal résiduel lié au signal de commande peut encore être présent dans le signal corrigé, et de ce fait peut réduire les performances des mesures gyroscopiques fournies par le système gyroscopique.

Afin de s'affranchir de cette erreur résiduelle relative au facteur d'échelle, on peut notamment prévoir d'appliquer le signal de commande sur un intervalle de temps assez long pour que le signal résiduel puisse être considéré comme un signal haute fréquence et être ainsi filtré. Dans ce cas, après cet intervalle de temps, on peut commencer à filtrer le signal corrigé. Puis, en continuant à appliquer le signal de commande périodique au gyroscope vibrant, on est en mesure de fournir des mesures gyroscopiques performantes sur une fenêtre de temps glissante correspondante au moins à cet intervalle de temps.

A cet effet, en sortie 25 du système gyroscopique illustré en figure 2-A, on peut prévoir d'inclure un filtre passe-bas.

Dans un mode de réalisation de la présente invention, on peut prévoir en sortie 25 un signal corrigé de valeur de vitesse angulaire, et non pas de valeur d'angle comme énoncé ci-avant. Dans ce contexte, l'unité d'intégration 23 n'est pas requise dans l'architecture si le signal de commande indique directement des valeurs d'angle.

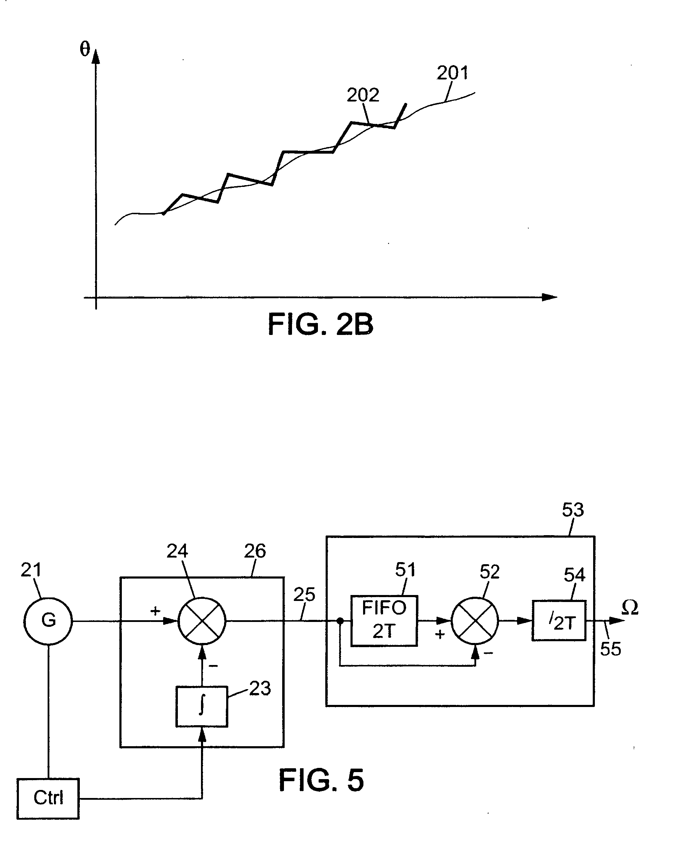

La figure 2-B illustre ainsi un signal corrigé 202 fourni en sortie 25 de l'unité de traitement sur lequel un résidu du signal de commande triangulaire est sensiblement visible. Un signal corrigé filtré 201 correspond alors à la sortie du filtre passe-bas.

Le signal corrigé filtré 201 correspond ici au signal sur lequel les mesures gyroscopiques du système gyroscopique selon un mode de réalisation de la présente invention sont fournies.

En procédant ainsi par filtrage, un tel système gyroscopique peut avantageusement fournir des mesures gyroscopiques performantes alors même que le facteur d'échelle n'est pas connu.

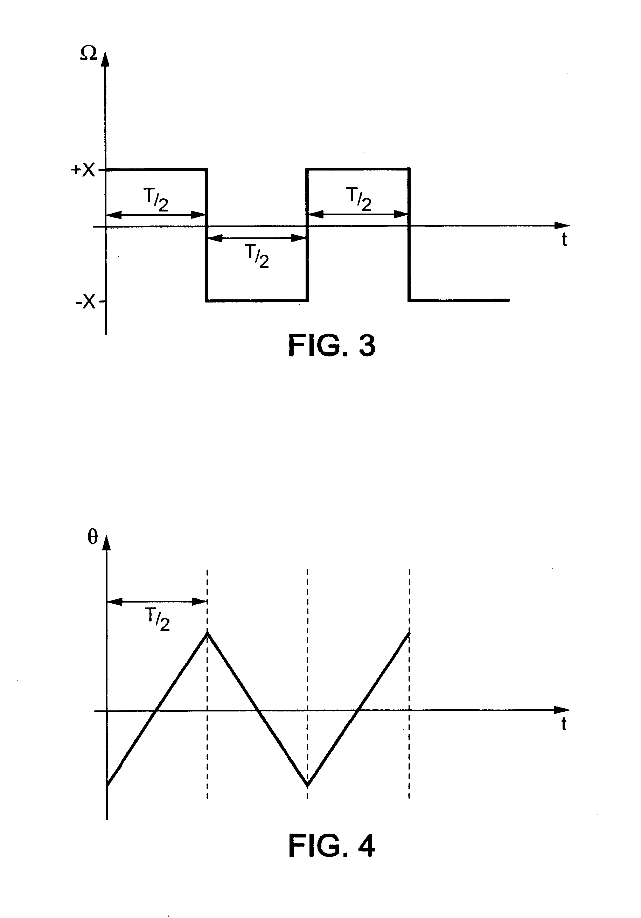

La figure 3 illustre un signal de commande selon un mode de réalisation de la présente invention. Ce signal est illustré dans un référentiel représentant le temps selon l'axe des abscisses et représentant la vitesse de rotation commandée à la position géométrique de vibration du gyroscope vibrant selon l'axe des ordonnées. Ici, le signal de commande est un signal rectangulaire représentant les variations de la vitesse de rotation appliquée au gyroscope vibrant en fonction du temps. En effet, il est ici prévu d'appliquer une vitesse de rotation $\Omega$ d'une valeur X et -X alternativement, respectivement sur des parties de période de temps T/2 consécutives. La vitesse de rotation est donc ici constante sur chacune des parties de période de temps T/2 et alternativement positive et négative sur deux parties de période de temps T/2 consécutives. On peut par exemple appliquer une valeur de vitesse de rotation $\Omega$ comprise entre 0.5 degrés par seconde et 20 degrés par seconde.

Il convient de noter ici que dans le mode de réalisation dans lequel un filtrage du signal de commande est effectué, plus la périodicité du signal de commande est courte, plus vite il est possible de fournir un signal corrigé et donc des mesures performantes du système gyroscopique.

Le signal de commande tel qu'illustré sur la figure 3 est fourni à la fois au gyroscope vibrant 21 et à l'entité de traitement 26.

Sur réception du signal de commande au niveau de l'entité de traitement 26, ce signal de commande, correspondant à la valeur de vitesse angulaire, est tout d'abord intégré. Ainsi, dans un mode de réalisation de la présente invention, l'intégration du signal de commande tel qu'illustré à la figure 3 est fourni en sortie de l'unité d'intégration 23 sous la forme d'un signal tel qu'illustré à la figure 4.

Ce signal est un signal triangulaire périodique de période T, représentant donc la variation de la position géométrique de vibration du gyroscope vibrant 21 en fonction du temps.

En commandant un changement uniforme de la position de la vibration sur une étendue angulaire de $2\pi/kN$ radians, on est en mesure de moyenner les erreurs du signal de mesure du gyroscope selon l'équation suivante, les erreurs pouvant s'écrire sous la forme $\sin(nN\theta)$ ou $\cos(nN\theta)$ :

$$\int_{\theta_0}^{\theta_0+2\pi/kN} (a_n \sin(nN\theta) + b_n \cos(nN\theta)).d\theta$$

où N est le mode fréquentiel de vibration du gyroscope vibrant ;
où k est un nombre entier positif ;
où n est un nombre entier correspondant à un ordre d'erreur à corriger ; et
où $\theta_0$ est une position géométrique de vibration initiale du gyroscope vibrant.

Il convient de noter que le nombre entier k peut être déterminé selon l'ordre des erreurs du signal de mesure du gyroscope vibrant que l'on souhaite corriger. Pour une valeur de k égale à 1 et un gyroscope vibrant pour lequel le mode fréquentiel est égal à 2 (c'est-à-dire N=2), on est en mesure de moyenner les erreurs de tout ordre qui sont relatives à la position géométrique de vibration du gyroscope.

Pour k égal à 1 et pour un gyroscope vibrant pour lequel le mode fréquentiel est égal à 2, c'est-à-dire pour lequel N égale à 2, on corrige les erreurs d'ordre n supérieur ou égal à 1 selon l'équation suivante :

$$\int_{\theta_0}^{\theta_0+\pi} (a_n \sin(2n\theta) + b_n \cos(2n\theta)).d\theta$$

N, le mode fréquentiel de vibration d'un gyroscope vibrant peut par exemple être égal à 2, ou encore à 3 comme pour un gyroscope vibrant tel que celui décrit dans le document US7281426 par exemple.

On peut prévoir de retrancher le signal de commande résiduel, lié au facteur d'échelle, au signal de mesure en déterminant une différence entre une première valeur angulaire mesurée au début de la période du signal de commande et une seconde valeur angulaire mesurée à la fin de cette période, et en divisant cette différence par la valeur de la période.

On peut prévoir de prendre en considération deux positions géométriques de vibration occupées par le gyroscope vibrant à deux instants séparés d'une ou plusieurs périodes du signal de commande. Dans ce cas, on divise alors la différence entre les deux positions par le nombre de périodes qui séparent ces deux positions géométriques de vibration.

On fournit donc ici une valeur de vitesse angulaire. Avantageusement, cette valeur de vitesse angulaire est corrigée de l'erreur relative au facteur d'échelle.

La figure 5 illustre une architecture d'un système gyroscopique adapté pour fournir de telles valeurs de vitesse angulaire selon un mode de réalisation de la présente invention.

L'architecture illustrée est similaire en partie à celle décrite en référence à la figure 2-A avec un traitement en sortie 25 différent, mais destiné également à s'affranchir du résidu de signal de commande restant au sein du signal corrigé et lié au facteur d'échelle. Ici, il est prévu de traiter le signal corrigé en sortie 25 de l'unité de traitement 26 par une unité de calcul 53, cette unité de calcul comprenant une FIFO 51 (pour 'First In First Out' en anglais). Cette FIFO 51 stocke les valeurs angulaires fournies en sortie de l'unité de traitement 26 pour un nombre entier de période(s) du signal de commande 2T.

Puis, un soustracteur 52 en coopération avec un diviseur 54 est ensuite en mesure d'appliquer l'équation suivante pour fournir en sortie 55 des mesures de vitesse angulaire qui sont non seulement corrigées des erreurs relatives à la position géométrique de vibration du gyroscope vibrant mais qui en outre sont corrigées d'erreurs liées au facteur d'échelle :

$$\Omega = (\theta_{t+Mx2T} - \theta_t)/Mx2T$$

En effectuant une différence sur une période de Mx2T, on est en mesure d'annuler le facteur d'échelle.

**Revendications**

1. Procédé de mesures gyroscopiques fournies par un système gyroscopique comprenant un gyroscope vibrant ;

ledit gyroscope vibrant dans une première position géométrique de vibration initiale et fournissant un signal de mesure ;

dans lequel on applique au gyroscope vibrant un signal de commande périodique sur une période de temps, adapté :

- pour faire tourner (11) la position géométrique de vibration dans un premier sens, pendant une partie de la période de temps, provoquant un changement, selon un premier profil de vitesse, de la position de la vibration dudit gyroscope depuis la première position géométrique de vibration jusqu'à une seconde position géométrique de vibration ; et
- pour faire tourner (12) la position géométrique de vibration dans un second sens opposé au premier sens, pendant l'autre partie de la période de temps, provoquant un changement selon un second profil de vitesse, de la position de la vibration dudit gyroscope depuis la seconde position géométrique de vibration jusqu'à la première position géométrique de vibration ;

ledit signal de commande ayant une moyenne nulle sur ladite période de temps, et les premier et second profils de vitesse indiquant une variation de vitesse du changement de position géométrique de vibration en fonction du temps ; et

dans lequel (13) les mesures fournies par le système gyroscopique sont basées sur un signal corrigé représentant une variation de valeurs de position géométrique de vibration et obtenu en retranchant le signal de commande au signal de mesure fourni par le gyroscope.

2. Procédé selon la revendication 1, dans lequel le second profil de vitesse correspond à l'inverse du premier profil de vitesse en fonction du temps.

3. Procédé selon la revendication 1, dans lequel les deux parties de période de temps sont identiques.

4. Procédé selon l'une quelconque des revendications 1 à 3, dans lequel le signal de mesure du gyroscope et le signal de commande sont exprimés comme les mesures fournies par le système gyroscopique, soit en valeurs d'angle, soit en valeurs de vitesse angulaire.

5. Procédé de mesure gyroscopique selon l'une quelconque des revendications 1 à 3, dans lequel les mesures fournies par le système gyroscopique correspondent à des valeurs de vitesse angulaire, chaque valeur de vitesse angulaire résultant de la division d'une différence entre deux valeurs de positions géométriques de vibration du signal corrigé séparées par un nombre entier de périodes de temps par une valeur de temps correspondant au nombre entier de périodes de temps.

6. Procédé de mesure gyroscopique selon l'une quelconque des revendications 1 à 3, dans lequel les mesures fournies par le système gyroscopique sont issues d'un filtrage passe-bas du signal corrigé.

7. Procédé de mesure gyroscopique selon la revendication 6, dans lequel, avant de fournir des mesures du système gyroscopique, le signal périodique est appliqué pendant un intervalle de temps suffisamment long pour pouvoir considérer le signal de commande comme un signal haute fréquence par rapport au signal de mesure du gyroscope vibrant.

8. Procédé de mesure gyroscopique selon l'une quelconque des revendications précédentes, dans lequel la période de temps et les premier et second profils de vitesse du signal de commande sont déterminés de sorte que la première et la seconde position géométrique de vibration du gyroscope vibrant sont séparées de $2\pi/kN$ radians,

où N est un mode fréquentiel de vibration du gyroscope vibrant ;

où k est un nombre entier positif déterminé en fonction de l'ordre des erreurs à corriger.

9. Système gyroscopique comprenant :

- un gyroscope vibrant (21), ledit gyroscope vibrant dans une première position géométrique de vibration initiale et fournissant un signal de mesure ;
- une unité de commande (22) adaptée pour appliquer un signal de commande périodique, sur une période de temps, adapté :

∘ pour faire tourner la position géométrique de vibration dans un premier sens, pendant une partie de la période de temps, provoquant un changement, selon un premier profil de vitesse, de la position de la vibration dudit gyroscope depuis la première position géométrique de vibration jusqu'à une seconde position géométrique de vibration ; et
∘ pour faire tourner la position géométrique de vibration dans un second sens opposé au premier sens, pendant l'autre partie de la période de temps, provoquant un changement, selon un second profil de vitesse, de la position de la vibration dudit gyroscope depuis la seconde position géométrique de vibration jusqu'à la première position géométrique de vibration,

ledit signal de commande ayant une moyenne nulle sur ladite période de temps, et les premier et second profils de vitesse indiquant une variation de vitesse du changement de position géométrique de vibration en fonction du temps ; et

- une unité de traitement (26) adaptée pour fournir un signal corrigé représentant une variation de valeurs de position géométrique de vibration obtenu en retranchant le signal de commande au signal de mesure fourni par le gyroscope vibrant.

10. Système gyroscopique selon la revendication 9, dans lequel le second profil de vitesse correspond à l'inverse du premier profil de vitesse en fonction du temps.

11. Système gyroscopique selon la revendication 9 ou 10, comprenant en outre une unité de calcul (53), en sortie de l'unité de traitement (26), adaptée pour fournir des mesures gyroscopiques correspondant à des valeurs de vitesse angulaire, chaque valeur de vitesse angulaire résultant de la division d'une différence entre deux valeurs de positions géométriques de vibration du signal corrigé, séparées par un nombre entier de périodes de temps, par une valeur de temps correspondant au nombre entier de périodes de temps.

12. Système gyroscopique selon la revendication 9, comprenant en outre un filtre passe-bas en sortie de l'unité de traitement (26), adapté pour filtrer des composantes hautes fréquences du signal corrigé.

13. Système gyroscopique selon l'une quelconque des revendications 9 à 12, dans lequel la période de temps et les premier et second profils de vitesse du signal de commande sont déterminés de sorte que la première et la seconde position géométrique de vibration du gyroscope vibrant sont séparées de $2\pi/kN$ radians,
où N est un mode fréquentiel de vibration du gyroscope vibrant ;
où k est un nombre entier positif déterminé en fonction de l'ordre des erreurs à corriger.

**Patentansprüche**

1. Verfahren für gyroskopische Messungen, die von einem gyroskopischen System, das ein vibrierendes Gyroskop enthält, geliefert werden;
wobei das Gyroskop in einer ersten geometrischen Anfangsvibrationsposition vibriert und ein Messsignal liefert;
wobei in das vibrierende Gyroskop ein periodisches Steuersignal über eine Zeitperiode eingegeben wird, das dafür ausgelegt ist:

- die geometrische Vibrationsposition in einem ersten Richtungssinn während eines Teils der Zeitperiode zu drehen (11), was eine Änderung der Vibrationsposition des Gyroskops von der ersten geometrischen Vibrationsposition in eine zweite geometrische Vibrationsposition gemäß einem ersten Geschwindigkeitsprofil hervorruft; und
- die geometrische Vibrationsposition in einem zu dem ersten Richtungssinn entgegengesetzten zweiten Richtungssinn während des anderen Teils der Zeitperiode zu drehen (12), was eine Änderung der Vibrationsposition des Gyroskops von der zweiten geometrischen Vibrationsposition in die erste geometrische Vibrationsposition gemäß einem zweiten Geschwindigkeitsprofil hervorruft;

wobei das Steuersignal über die Zeitperiode einen Mittelwert null besitzt und das erste und das zweite Geschwindigkeitsprofil eine Veränderung der Geschwindigkeit der Änderung der geometrischen Vibrationsposition als Funktion der Zeit angeben; und wobei (13) die von dem gyroskopischen System gelieferten Messungen auf einem korrigierten Signal beruhen, das eine Veränderung von Werten der geometrischen Vibrationsposition repräsentiert und durch Abziehen des Steuersignals von dem von dem Gyroskop gelieferten Messsignal erhalten wird.

2. Verfahren nach Anspruch 1, wobei das zweite Geschwindigkeitsprofil dem Inversen des ersten Geschwindigkeitsprofils als Funktion der Zeit entspricht.

3. Verfahren nach Anspruch 1, wobei die zwei Teile der Zeitperiode gleich sind.

4. Verfahren nach einem der Ansprüche 1 bis 3, wobei das Messsignal des Gyroskops und das Steuersignal als die Messungen, die von dem gyroskopischen System geliefert werden, entweder als Winkelwerte oder als Winkelgeschwindigkeitswerte gegeben sind.

5. Verfahren zum gyroskopischen Messen nach einem der Ansprüche 1 bis 3, wobei die von dem gyroskopischen System gelieferten Messungen Winkelgeschwindigkeitswerten entsprechen, wobei sich jeder Winkelgeschwindigkeitswert aus der Division einer Differenz zwischen zwei Werten von geometrischen Vibrationspositionen des korrigierten Signals, die durch eine ganze Zahl von Zeitperioden getrennt sind, durch einen Wert der Zeit, der der ganzen Zahl von Zeitperioden entspricht, ergibt.

6. Verfahren zum gyroskopischen Messen nach einem der Ansprüche 1 bis 3, wobei die von dem gyroskopischen System gelieferten Messungen von einer Tiefpassfilterung des korrigierten Signals stammen.

7. Verfahren zum gyroskopischen Messen nach Anspruch 6, wobei vor der Lieferung der Messungen des gyroskopischen Systems das periodische Signal während eines Zeitintervalls eingegeben wird, das ausreichend lang ist, um das Steuersignal als ein Hochfrequenzsignal in Bezug auf das Messsignal des vibrierenden Gyroskops ansehen zu können.

8. Verfahren zum gyroskopischen Messen nach einem der vorhergehenden Ansprüche, wobei die Zeitperiode und das erste und das zweite Geschwindigkeitsprofil des Steuersignals in der Weise bestimmt werden, dass die erste und die zweite geometrische Vibrationsposition des vibrierenden Gyroskops durch 2n/kN Radian getrennt sind,
wobei N ein Vibrationsfrequenzmodus des vibrierenden Gyroskops ist;
wobei k eine positive ganze Zahl ist, die als Funktion der Größenordnung von zu korrigierenden Fehlern bestimmt wird.

9. Gyroskopische System, das Folgendes umfasst:

   - ein vibrierendes Gyroskop (21), wobei das Gyroskop in einer ersten geometrischen Anfangsvibrationsposition vibriert und ein Messsignal liefert;
   - eine Steuereinheit (22), die dafür ausgelegt ist, ein periodisches Steuersignal über eine Zeitperiode einzugeben, wobei das Steuersignal dafür ausgelegt ist:

      ○ die geometrische Vibrationsposition in einem ersten Richtungssinn während eines Teils der Zeitperiode zu drehen, was eine Änderung der Vibrationsposition des Gyroskops von der ersten geometrischen Vibrationsposition in eine zweite geometrische Vibrationsposition gemäß einem ersten Geschwindigkeitsprofil hervorruft; und
      ○ die geometrische Vibrationsposition in einem zu dem ersten Richtungssinn entgegengesetzten zweiten Richtungssinn während des anderen Teils der Zeitperiode zu drehen, was eine Änderung der Vibrationsposition des Gyroskops von der zweiten geometrischen Vibrationsposition in die erste geometrische Vibrationsposition gemäß einem zweiten Geschwindigkeitsprofil hervorruft,
      wobei das Steuersignal über die Zeitperiode einen Mittelwert null besitzt und das erste und das zweite Geschwindigkeitsprofil eine Veränderung der Geschwindigkeit der Änderung der geometrischen Vibrationsposition als Funktion der Zeit angeben; und

   - eine Verarbeitungseinheit (26), die dafür ausgelegt ist, ein korrigiertes Signal zu liefern, das eine Veränderung von Werten der geometrischen Vibrationsposition repräsentiert und durch Abziehen des Steuersignals von dem von dem vibrierenden Gyroskop gelieferten Messsignal erhalten wird.

10. Gyroskopische System nach Anspruch 9, wobei das zweite Geschwindigkeitsprofil dem Inversen des ersten Geschwindigkeitsprofils als Funktion der Zeit entspricht.

11. Gyroskopische System nach Anspruch 9 oder 10, das außerdem eine Recheneinheit (53) am Ausgang der Verarbeitungseinheit (26) umfasst, die dafür ausgelegt ist, gyroskopische Messungen, die Werten der Winkelgeschwindigkeit entsprechen, zu liefern, wobei sich jeder Winkelgeschwindigkeitswert aus der Division einer Differenz zwischen zwei Werten von geometrischen Vibrationspositionen des korrigierten Signals, die durch eine ganze Zahl von Zeitperioden getrennt sind, durch einen Wert der Zeit, der der ganzen Zahl von Zeitperioden entspricht, ergibt.

12. Gyroskopische System nach Anspruch 9, das außerdem am Ausgang der Verarbeitungseinheit (26) ein Tiefpassfilter umfasst, das dafür ausgelegt ist, Hochfrequenzkomponenten des korrigierten Signals zu filtern.

13. Gyroskopisches System nach einem der Ansprüche 9 bis 12, wobei die Zeitperiode und das erste und das zweite Geschwindigkeitsprofil des Steuersignals in der Weise bestimmt werden, dass die erste und die zweite geometrische Vibrationsposition des vibrierenden Gyroskops durch 2n/kN getrennt sind, wobei N ein Vibrationsfrequenzmodus des vibrierenden Gyroskops ist;
wobei k eine positive ganze Zahl ist, die als Funktion der Größenordnung von zu korrigierenden Fehlern bestimmt wird.

**Claims**

1. Method of gyroscopic measurements supplied by a gyroscopic system including a vibratory gyroscope; said gyroscope vibrating in an initial first vibration geometrical position and supplying a measurement signal;
wherein there is applied to the vibratory gyroscope over a period of time a periodic command signal adapted:

- to cause the vibration geometrical position to turn (11) a first way, during one part of the time period, causing a change, in accordance with a first speed profile, of the position of the vibration of said gyroscope from the first vibration geometrical position to a second vibration geometrical position; and

- to cause the vibration geometrical position to turn (12) a second way opposite the first way during the other part of the time period, causing a change in accordance with a second speed profile of the position of the vibration of said gyroscope from the second vibration geometrical position to the first vibration geometrical position;

said command signal having a zero average over said time period, and the first and second speed profiles indicating a speed variation of the change of vibration geometrical position as a function of time; and

wherein (13) the measurements supplied by the gyroscopic system are based on a corrected signal representing a variation of vibration geometrical position values and obtained by subtracting the command signal from the measurement signal supplied by the gyroscope.

2. Method according to Claim 1, wherein the second speed profile is the reverse of the first speed profile as a function of time.

3. Method according to Claim 1, wherein the two parts of the time period are identical.

4. Method according to any of Claims 1 to 3, wherein the measurement signal from the gyroscope and the command signal are expressed like the measurements supplied by the gyroscopic system either in angle values or in angular speed values.

5. Gyroscopic measurement method according to any of Claims 1 to 3, wherein the measurements supplied by the gyroscopic system correspond to angular speed values, each angular speed value resulting from the division of a difference between two vibration geometrical position values of the corrected signal separated by an integer number of time periods by a time value corresponding to the integer number of time periods.

6. Gyroscopic measurement method according to any of Claims 1 to 3, wherein the measurements supplied by the gyroscopic system are obtained by low-pass filtering of the corrected signal.

7. Gyroscopic measurement method according to Claim 6, wherein, before supplying measurements effected by the gyroscopic system, the periodic signal is applied during a time interval sufficiently long to be able to consider the command signal as high-frequency signal relative to the measurement signal from the vibratory gyroscope.

8. Gyroscopic measurement method according to any of the preceding claims, wherein the time period and the first and second speed profiles of the command signal are determined so that the first and second vibration geometrical positions of the vibratory gyroscope are separated by $2\pi/kN$ radians, where N is a frequency mode of vibration of the vibratory gyroscope; and

where k is a positive integer number determined as a function of the order of the errors to be corrected.

9. Gyroscopic system including:

- a vibratory gyroscope (21), said gyroscope vibrating in an initial first vibration geometrical position and supplying a measurement signal;
- a command unit (22) adapted to apply a periodic command signal over a time period adapted:

  ∘ to cause the vibration geometrical position to turn a first way, during one part of the time period, causing a change in accordance with a first speed profile of the position of the vibration of said gyroscope from the first vibration geometrical position to a second vibration geometrical position; and
  ∘ to cause the vibration geometrical position to turn a second way opposite the first way during the other part of the time period, causing a change in accordance with a second speed profile of the position of the vibration of said gyroscope from the second vibration geometrical position to the first vibration geometrical position;

  said command signal having a zero average over said time period and the first and second speed profiles indicating a speed variation of the change of vibration geometrical position as a function of time; and
- a processing unit (26) adapted to supply a corrected signal representing a variation of vibration geometrical position values obtained by subtracting the command signal from the measurement signal supplied by the vibratory gyroscope.

10. Gyroscopic system according to Claim 9, wherein the second speed profile is the reverse of the first speed profile as a function of time.

11. Gyroscopic system according to Claim 9 or Claim 10, further including a calculation unit (53) at the output of the processing unit (26) adapted to supply gyroscopic measurements corresponding to angular speed values, each angular speed value resulting from the division of a difference between two vibration geometrical position values of the corrected signal separated by an integer number of time periods by a time value corresponding to the integer number of time periods.

12. Gyroscopic system according to Claim 9, further including a low-pass filter at the output of the processing unit (26) adapted to filter highfrequency components of the corrected signal.

13. Gyroscopic system according to any of Claims 9 to 12, wherein the time period and the first and second speed profiles of the command signal are determined so that the first and second vibration geometrical positions of the vibratory gyroscope are separated by $2\pi/kN$ radians,
where N is a frequency mode of vibration of the vibratory gyroscope, and
where k is a positive integer number determined as a function of the order of the errors to be corrected.

**FIG. 1A**

Signal commande — 11

Signal commande — 12

Signal corr
=
Signal mesure
-
Signal commande — 13

**FIG. 1B**

FIG. 1C

FIG. 2A

FIG. 2B

FIG. 5

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2755227
- EP 1571417 A
- FR 2904870
- US 7281426 B

**Littérature non-brevet citée dans la description**

- **DE ANDREI M. SHKEL.** Type I und Type II micromachined vibratory gyroscopes. *IEEE/ION (pour 'Institute of Electrical and Electronics Engineer/ Institute Of Navigation' PLANS 2006, San Diego, CA, USA),* 2006, 586-593